# EUROPEAN PATENT SPECIFICATION

(11) **EP 3 466 303 B1**
(45) Date of publication and mention of the grant of the patent: **01.07.2020**
(21) Application number: 18195387.8
(22) Date of filing: 19.09.2018
(51) Int. Cl.: A47B 88/487

(54) **PERFECTED GUIDE FOR DRAWERS**
VERBESSERTE SCHUBLADENFÜHRUNG
GUIDE AMELIORÉ POUR TIROIR

(30) Priority: 04.10.2017 IT 201700110997
(43) Date of publication of application: 10.04.2019
(73) Proprietor: Muzzin S.p.A., Pordenone (IT)
(72) Inventor: MUZZIN, Angelo, 33080 Bannia di Fiume Veneto (PN) (IT)
(74) Representative: Martegani, Franco

(56) References cited:
- EP-A1- 3 155 930

## Description

The present invention relates to an improved guide for drawers, which can be used in the most varied types of furniture, for both home and laboratory furniture.

Guides for drawers of the known type consist of a stationary (fixed) part, fixed to the furniture (for example a shoulder), and a movable part carrying the drawer and sliding on said fixed part with the interpositioning of sliding means such as rollers and similar rolling elements.

The movable part of the guide translates between two opposite end positions: a first withdrawn position, in which the drawer is closed inside the furniture, and a second extracted position, in which the drawer protrudes from the furniture itself.

A guide of this type is described, for example, in patent EP 3155930 or DE 296 16 756 U1.

Among others, these guides must meet the following three very important requirements:
- adequately supporting the weight of the drawer, also in the presence of significant loads;
- minimizing the side clearance of the movable part of the guide, especially in the closing phase of the drawer;
- providing means for stopping the movable part of the guide (stops), both in opening and closing.

The general objective of the present invention is to provide a guide that meets the three requirements listed above in a particularly economical and advantageous manner with respect to the prior art.

This objective is achieved by a guide having the characteristics specified in the enclosed claim 1 and sub-claims.

The structural and functional characteristics of the present invention, and the advantages with respect to the known art can be clearly understood from the following description, referring to the attached drawings which illustrate an embodiment of the invention itself.

In the drawings:
- figure 1 is a perspective view illustrating a guide according to the invention in the position with the drawer closed;
- figure 2 is a view similar to figure 1, but illustrating the guide in the position with the drawer open;

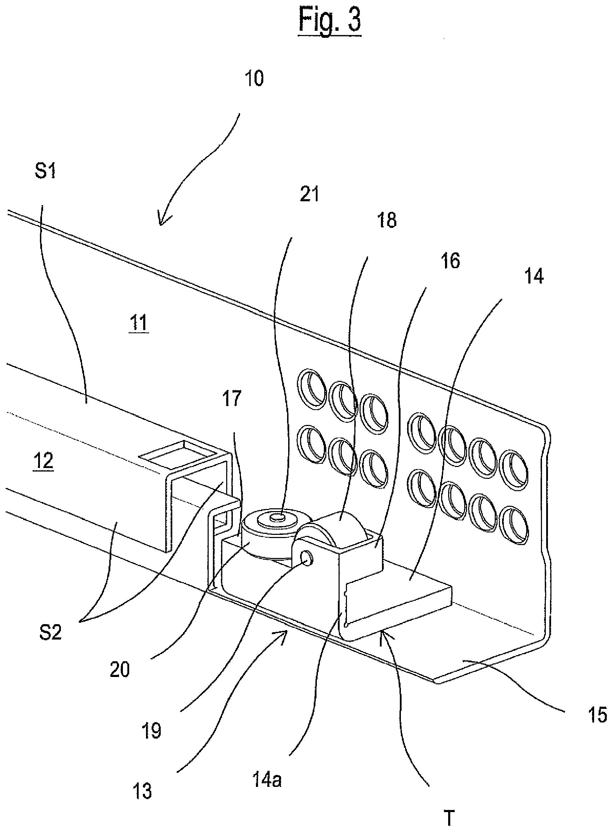

- figure 3 is a detail in a perspective view illustrating the front end of the stationary (fixed) part of the guide in correspondence with which the vertical supporting and lateral guiding group of the movable part of the guide on which the drawer (not shown) is fixed, are assembled;

- figure 4 is a perspective view from above of the fixed part alone of the guide illustrating the movable roller cage on which the movable part of the guide rests and slides backwards and forwards;

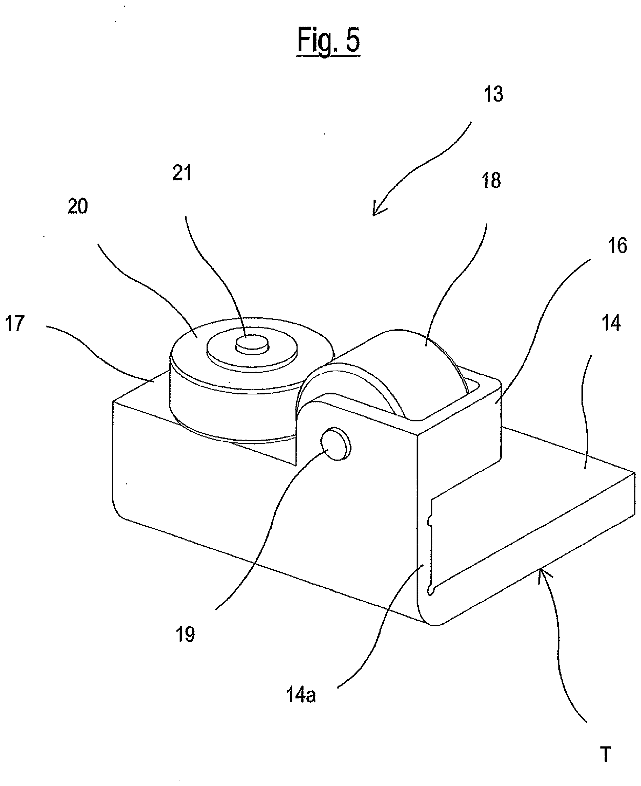

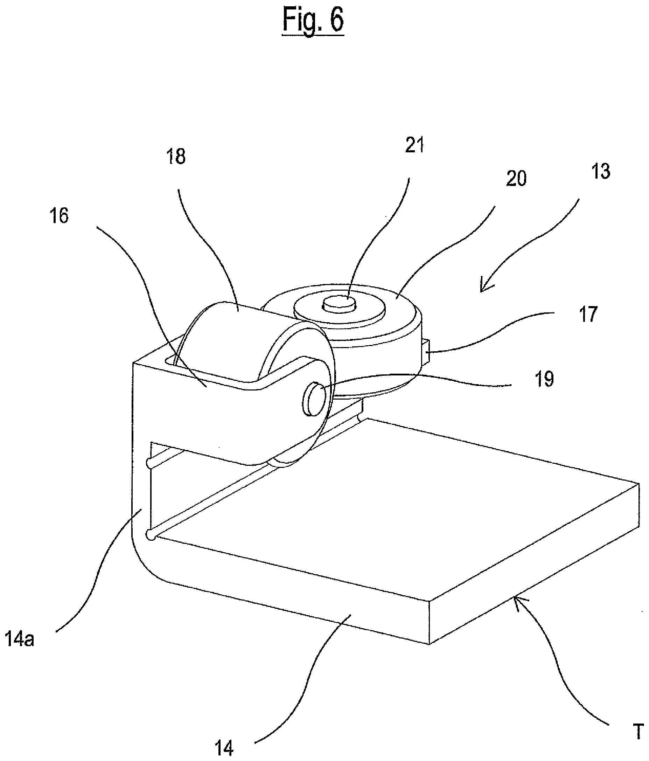

- figures 5 and 6 are enlarged perspective views illustrating the vertical supporting and lateral guiding group of the movable part of the guide;
- figure 7 is an enlarged detail in a perspective view from above illustrating the stop position of the movable part of the guide in the opening phase of the drawer;
- figure 8 is a view similar to figure 7 but illustrating the stop position of the movable part of the guide in the closing phase of the drawer.

With reference to the drawings, the guide for drawers according to the invention is indicated as a whole with 10 and is structurally composed of a stationary part (fixed) 11 and a movable part 12, that can be moved backwards and forwards on rollers with respect to said fixed part 11, between a first position when the drawer is open and a second position when the drawer is closed. Said movable part 12 has an overturned "U" section with a horizontal section S1 on which the drawer is to be fixed, and two opposing vertical sections S2.

The fixed part 11 is fixed to the furniture (shoulder not shown) inside which the drawer (not shown) is housed, said drawer being assembled on the movable part (not shown) of the guide for translating with it. This guide/drawer/furniture arrangement is not illustrated and described in detail herein as it is well known to skilled persons in the field.

According to the invention, a supporting and guiding group 13 is assembled in correspondence with the front end of the fixed part 11, suitable for vertically sustaining and laterally guiding the movable part 12, and also acting as run end (stop) for the same movable part 12, in both the opening and closing phase of the drawer.

Characteristically, said group 13 is composed of a frame T having a substantially "L"-shaped section with a horizontal base 14 and a vertical wall 14a.

The base 14 is integrally fixed to the horizontal section 15 of the fixed part 11 of the guide 10, and the vertical wall 14a carries a fork 16 and a shelf 17.

The fork 16 carries a first rolling element consisting of a roller 18 rotating freely around a horizontal axis 19.

A second rolling element consisting of a roller 20 rotating freely around a vertical axis 21, is assembled on the shelf 17.

The roller 18 in contact with the section S1 sustains the weight of the drawer, conferring to the movable part 12 of the guide that is sliding on it, a greater capacity in a vertical direction.

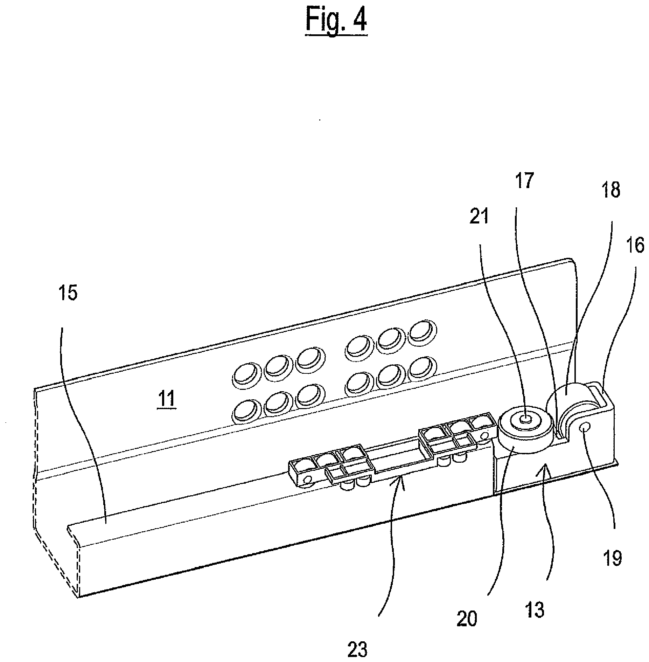

The roller 20, on the other hand, acts on the opposed internal surfaces of the vertical sections S2 of the movable part 12 of the guide, minimizing the lateral clearance, especially in the closing phase of the drawer in which the roller cage (note) 23 is in the completely withdrawn position, opposite to that illustrated in figure 4.

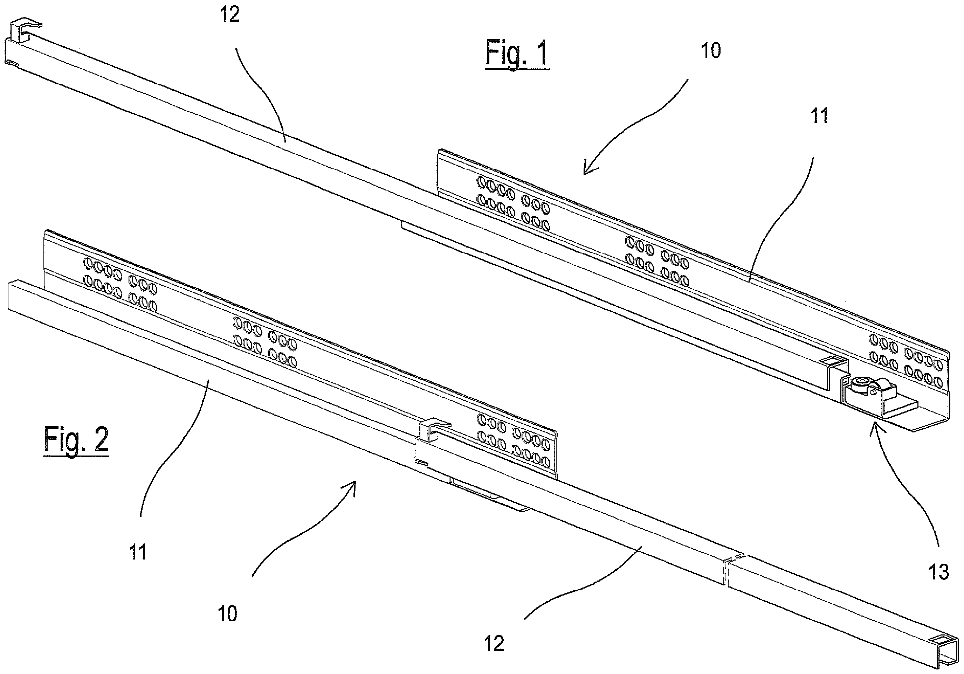

Furthermore, as can be clearly seen from figures 1, 2, 7 and 8, the group 13 according to the invention also acts as a run end (stop) for the movable part 12 of the guide, without the need for providing separate stop means, in both the opening and closing phases of the drawer.

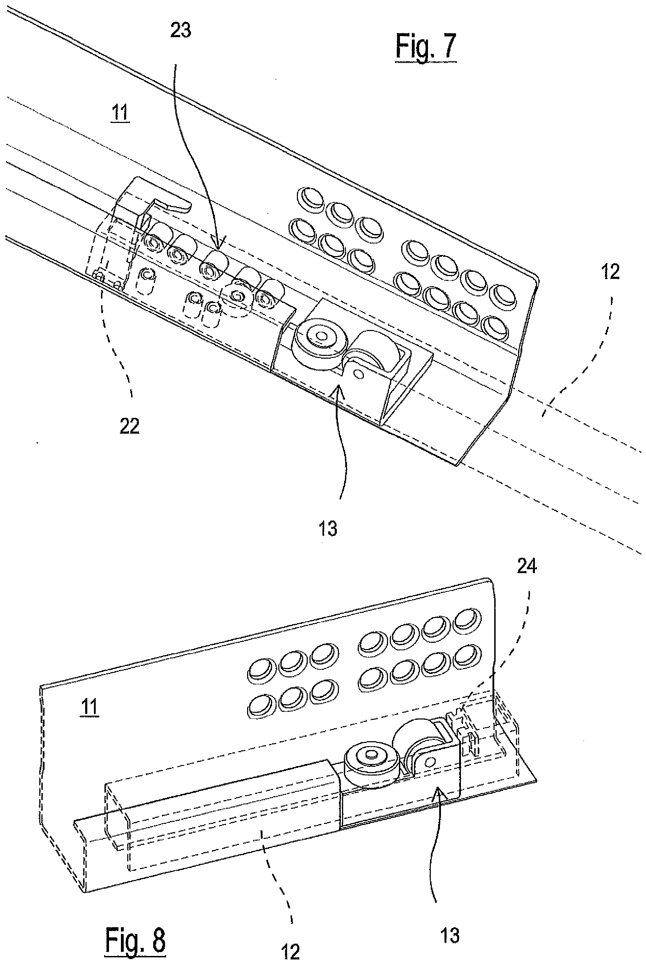

More specifically, as can be clearly seen from figure 7 of the drawings, in the opening phase of the drawer, when the drawer is completely open, i.e. when the movable part 12 is completely extracted, the roller cage 23 is blocked between the group 13 according to the invention and the rear stop 22 of the movable part 12 of the guide.

As can be clearly seen from figure 8, the closed position of the drawer is delimited by the group 13 according to the invention which is abutted against a stop 24 (for example a plastic component) fixed to the movable part 12 of the guide.

The embodiment of the invention described above with reference to the drawings is illustrative but nonlimiting.

The cage 13 shown, in fact, comprises at least one roller 18 and at least one roller 20, but there can be more than one of said rollers 18, 20, and they can be substituted by rolling elements of another type, for example spheres, to be considered as completely equivalent.

Finally, the drawer and furniture in which the drawer is inserted, in combination with the guide according to the invention, as well as other known details of the guide, have not been described in detail herein as they are well known to skilled persons in this field of the art.

The objective mentioned in the preamble of the description has therefore been achieved.

The protection scope of the present invention is defined by the enclosed claims.

## Claims

1. A guide for drawers of the type consisting of a fixed part (11) (stationary) and a movable part (12) that can be moved on said fixed part (11) between two terminal positions, a first position corresponding to when the drawer is open, and a second position corresponding to when the drawer is closed, at least one roller cage (23) being interposed between said two fixed (11) and movable (12) parts, which can move together with said movable part (12) of the guide (10), said movable part (12) of the guide (10) having an overturned "U" section with an upper horizontal section (S1) and two opposing vertical side sections (S2), **characterized in that** a supporting and guiding group (13) cooperates with said at least one roller cage (23) in the first position, said supporting and guiding group (13) comprising first rolling elements (18) on which said horizontal section (S1) of said movable part (12) of the guide, rests, and second rolling elements (20) on which said opposing vertical sections (S2) slide, said first and second rolling elements (18, 20) being fixed in correspondence with the front free end of the fixed part (11) of the guide (10).

2. The guide according to claim 1, **characterized in that** said first and second rolling elements (18, 20) are rollers.

3. The guide according to claim 1, **characterized in that** said first and second rolling elements (18, 20) are assembled on a frame (T) fixed to the front end of the fixed part (11) of the guide (10).

4. The guide according to claim 3, **characterized in that** at least a first roller (18) rotating freely around a horizontal axis (19) on which the horizontal section (S1) of said movable part (12) of the guide rests, is assembled on said frame (T), together with at least a second roller (20) rotating around a vertical axis (21) on which said vertical sections (S2) of the movable part (12) of the guide, slide.

5. The guide according to claim 3, **characterized in that** said frame (T) has a substantially "L"-shaped section with a horizontal base (14) fixed to the fixed part (11) of the guide and a vertical part (14a) from which a shelf carrying said rolling elements (18, 20), extends.

6. The guide according to claim 1, **characterized in that** when said movable part (12) is completely extracted, said roller cage (23) is blocked between said group (13) and a rear stop (22) of the movable part (12) of the guide.

7. The guide according to claim 1, **characterized in that** said closed position of the drawer is delimited by said group (13) which is abutted against a stop (24) fixed to the movable part (12) of the guide.

## Patentansprüche

1. Führung für Schubladen des Typs, bestehend aus einem feststehenden Teil (11) (stationär) und einem beweglichen Teil (12), der auf dem feststehenden Teil (11) zwischen zwei Endpositionen bewegt werden kann, einer ersten Position, die dem Zustand entspricht, in dem die Schublade geöffnet ist, und einer zweiten Position, die dem Zustand entspricht, in dem die Schublade geschlossen ist, mindestens einem Rollenkäfig (23), der zwischen dem feststehenden Teil (11) und dem beweglichen Teil (12) angeordnet ist und sich zusammen mit dem beweglichen Teil (12) der Führung (10) bewegen kann, wobei der bewegliche Teil (12) der Führung (10) einen umgedrehten "U"-Abschnitt mit einem oberen horizontalen Abschnitt (S1) und zwei gegenüberliegenden vertikalen Seitenabschnitten (S2) aufweist, **dadurch gekennzeichnet, dass** eine Stütz- und Führungsgruppe (13) mit dem mindestens einen Rollenkäfig (23) in der ersten Position zusammenwirkt, wobei die Stütz- und Führungsgruppe (13) erste Wälzelemente (18) umfasst, auf denen der horizontale Abschnitt (S1) des beweglichen Teils (12) der Führung ruht, sowie zweite Wälzelemente (20) umfasst, auf denen die gegenüberliegenden vertikalen Abschnitte (S2) gleiten, wobei die ersten und die zweiten Wälzelemente (18, 20) in Übereinstimmung mit dem vorderen freien Ende des feststehenden Teils (11) der Führung (10) befestigt sind.

2. Führung nach Anspruch 1, **dadurch gekennzeichnet, dass** die ersten und die zweiten Wälzelemente (18, 20) Rollen sind.

3. Führung nach Anspruch 1, **dadurch gekennzeichnet, dass** die ersten und die zweiten Wälzelemente (18, 20) an einem Rahmen (T) montiert sind, der an dem vorderen Ende des feststehenden Teils (11) der Führung (10) befestigt ist.

4. Führung nach Anspruch 3, **dadurch gekennzeichnet, dass** mindestens eine erste Rolle (18), die sich frei um eine horizontale Achse (19) dreht und auf welcher der horizontale Abschnitt (S1) des beweglichen Teils (12) der Führung ruht, auf dem Rahmen (T) montiert ist, zusammen mit mindestens einer zweiten Rolle (20), die sich um eine vertikale Achse (21) dreht und auf der die vertikalen Abschnitte (S2) des beweglichen Teils (12) der Führung gleiten.

5. Führung nach Anspruch 3, **dadurch gekennzeichnet, dass** der Rahmen (T) einen im Wesentlichen "L"-förmigen Querschnitt hat, mit einer horizontalen Basis (14), die an dem feststehenden Teil (11) der Führung befestigt ist, und einem vertikalen Teil (14a), von dem sich eine Auflage, die die Wälzelemente (18, 20) trägt, erstreckt.

6. Führung nach Anspruch 1, **dadurch gekennzeichnet, dass**, wenn der bewegliche Teil (12) vollständig herausgezogen ist, der Rollenkäfig (23) zwischen der Gruppe (13) und einem hinteren Anschlag (22) des beweglichen Teils (12) der Führung blockiert ist.

7. Führung nach Anspruch 1, **dadurch gekennzeichnet, dass** die geschlossene Position der Schublade durch die Gruppe (13) begrenzt wird, die gegen einen Anschlag (24) stößt, der an dem beweglichen Teil (12) der Führung befestigt ist.

## Revendications

1. Guide pour tiroirs du type constitué d'une partie fixe (stationnaire) (11) et d'une partie mobile (12) qui peut être mue sur ladite partie fixe (11) entre deux positions terminales, une première position correspondant à quand le tiroir est ouvert et une seconde position correspondant à quand le tiroir est fermé, au moins une cage à rouleaux (23) étant intercalée entre lesdites deux parties fixe (11) et mobile (12) et pouvant se déplacer avec ladite partie mobile (12) du guide (10), ladite partie mobile (12) du guide (10) ayant une section en forme de "U" retourné, avec une section horizontale supérieure (S1) et deux sections latérales verticales opposées (S2), **caractérisé en ce qu'**un groupe de support et de guidage (13) coopère avec ladite au moins une cage à rouleaux (23) dans la première position, ledit groupe de support et de guidage (13) comprenant des premiers éléments de roulement (18) sur lesquels ladite section horizontale (S1) de ladite partie mobile (12) du guide repose et des seconds éléments de roulement (20) sur lesquels lesdites sections verticales opposées (S2) coulissent, lesdits premiers et seconds éléments de roulement (18, 20) étant fixes par rapport à l'extrémité libre avant de la partie fixe (11) du guide (10).

2. Guide selon la revendication 1, **caractérisé en ce que** lesdits premiers et seconds éléments de roulement (18, 20) sont des rouleaux.

3. Guide selon la revendication 1, **caractérisé en ce que** lesdits premiers et seconds éléments de roulement (18, 20) sont assemblés sur un châssis (T) fixé à l'extrémité avant de la partie fixe (11) du guide (10).

4. Guide selon la revendication 3, **caractérisé en ce qu'**au moins un premier rouleau (18) pivotant librement autour d'un axe horizontal (19) sur lequel la section horizontale (S1) de ladite partie mobile (12) du guide repose est assemblé sur ledit châssis (T) avec au moins un second rouleau (20) pivotant autour d'un axe vertical (21) sur lequel lesdites sections verticales (S2) de la partie mobile (12) du guide coulissent.

5. Guide selon la revendication 3, **caractérisé en ce que** ledit châssis (T) a une section sensiblement en forme de "L" avec une base horizontale (14) fixée à la partie fixe (11) du guide et une partie verticale (14a) à partir de laquelle s'étend une tablette portant lesdits éléments de roulement (18, 20).

6. Guide selon la revendication 1, **caractérisé en ce que**, quand ladite partie mobile (12) est complètement extraite, ladite cage à rouleaux (23) est bloquée entre ledit groupe (13) et une butée arrière (22) de la partie mobile (12) du guide.

7. Guide selon la revendication 1, **caractérisé en ce que** ladite position fermée du tiroir est délimitée par ledit groupe (13) qui s'appuie contre une butée (24) fixée sur la partie mobile (12) du guide.
